# EUROPEAN PATENT SPECIFICATION

(11) **EP 4 601 079 B1**
(45) Date of publication and mention of the grant of the patent: **28.10.2026**
(21) Application number: 25154830.1
(22) Date of filing: 29.01.2025
(51) Int. Cl.: H01M 10/613, H01M 50/209, H01M 50/249, H01M 50/289, H01M 50/293, H01M 50/383, H01M 10/651, H01M 10/6569, H01M 10/659, H01M 10/6555, H01M 10/658

(54) **BATTERY ASSEMBLY AND DEVICE**
BATTERIEANORDNUNG UND VORRICHTUNG
ENSEMBLE BATTERIE ET DISPOSITIF

(30) Priority: 06.02.2024 CN 202410174397
(43) Date of publication of application: 13.08.2025
(73) Proprietor: BYD Company Limited, Shenzhen, Guangdong 518118 (CN)
(72) Inventor: SU, Bizhe, Shenzhen, 518118 (CN); CAI, Yaomin, Shenzhen, 518118 (CN); PENG, Qingbo, Shenzhen, 518118 (CN); LU, Zhipei, Shenzhen, 518118 (CN); SUN, Huajun, Shenzhen, 518118 (CN)
(74) Representative: Mathys & Squire

(56) References cited:
- US-A1- 2020 287 252
- US-A1- 2020 295 416
- US-A1- 2022 223 946
- US-A1- 2023 032 529

## Description

### FIELD

The present disclosure relates to the field of battery technologies, and specifically, to a battery assembly and a device.

### BACKGROUND

A power battery, when being continuously overcharged, or when being collided/punctured, is prone to an internal short circuit and thermal runaway. In order to suppress thermal runaway of a power cell and impact of thermal runaway on an adjacent cell, the industry usually places a flame retardant medium (such as aerogel) on a housing surface of a power cell. However, it is difficult for such flame retardant media to match with different types of cells, and it is difficult to effectively block thermal propagation between cells. Therefore, it is necessary to develop a universal solution that can effectively block thermal propagation from a cell with thermal runaway to an adjacent cell. Documents US2022/223946, US2020/295416, US2020/287252, US2023/032529 disclose battery assemblies comprising a cell and a heat absorption sheet; the cell comprising a housing, the housing being square, and the heat absorption sheet being arranged on a side surface of the housing; and an anti-explosion valve being arranged on the cell; wherein the heat absorption sheet comprises a heat absorption main material.

### SUMMARY

In view of this, the present disclosure provides a battery assembly and a device that seeks to solve a problem that a flame retardant/heat absorption medium set on a side of an existing cell cannot effectively prevent heat of a cell with thermal runaway from spreading to an adjacent cell.

Specifically, according to a first aspect, the present disclosure provides a battery assembly, including a cell and a heat absorption sheet; the cell includes a housing, the housing is square, and the heat absorption sheet is arranged on a side surface of the housing; and an anti-explosion valve is arranged on the cell. The heat absorption sheet includes a heat absorption main material, and mass m₀ of the heat absorption main material in grams meets the following relation: $X \leq {m}_{0} \leq 400 \times {S}_{1} \times c ′ \times ρ ,$ 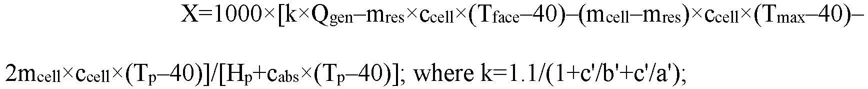 X=1000×[k×Qgen-mres×ccell×(Tface-40)-(mcell-mres)×ccell×(Tmax-40)-2mcell×ccell×(Tp-40)]/[Hp+cabs×(Tp-40)]; where k=1.1/(1+c'/b'+c'/a');
where m_{cell} and mᵣₑₛ are respectively masses of the cell before and after thermal runaway, both in the unit of kg; T_{face} and Tₘₐₓ are respectively a maximum temperature of the side surface on which the heat absorption sheet is arranged during thermal runaway, and a maximum temperature of the anti-explosion valve during thermal runaway, both in the unit of °C; c_{cell} is a specific heat capacity of the cell, in the unit of kJ/(kg-K); Q_{gen} is heat generated by the cell during thermal runaway measured based on Accelerating Rate Calorimetry in the unit of kJ; Tₚ, Hₚ, and c_{abs} are respectively a phase change temperature, phase change latent heat, and a specific heat capacity of the heat absorption main material, in units of °C, kJ/kg, and kJ/(kg·K) sequentially; and ρ is a density of the heat absorption sheet in the unit of kg/m³; S₁ is a frontal projected area of the heat absorption sheet on the side surface of the housing on which the heat absorption sheet is arranged, in the unit of m²; a' and b' are respectively a length and a width of the side surface of the housing on which the heat absorption sheet is arranged, in the unit of m; c' is a dimension of the housing in a direction perpendicular to the side surface, in the unit of m.

In the foregoing battery assembly of the present disclosure, a heat absorption sheet is arranged on a side surface of a cell, and a specific relation is established between a mass of a heat absorption main material used in the heat absorption sheet, a heat absorption parameter of the heat absorption sheet, a size of the heat absorption sheet, and a size of a battery housing, and the foregoing relation is met, so that the heat generated by the cell during thermal runaway can be fully absorbed by the heat absorption sheet arranged on the cell, and thermal propagation is suppressed, thereby ensuring safety performance of a battery system containing multiple cells, while not extensively affecting space utilization thereof. In addition, the relation met by the foregoing heat absorption sheet is applicable to any type of cell and has strong universality.

According to a second aspect, the present disclosure provides a device including the battery assembly according to the first aspect of the present disclosure, and the device is an electrical device or an energy storage system.

### BRIEF DESCRIPTION OF THE DRAWINGS

FIG. 1 is a schematic structural diagram of a battery assembly according to an example of the present disclosure; and
FIG. 2 is another schematic structural diagram of a battery assembly according to an example of the present disclosure.

### DETAILED DESCRIPTION

A technical solution of examples of the present disclosure is described in detail in the following with reference to the accompanying drawings.

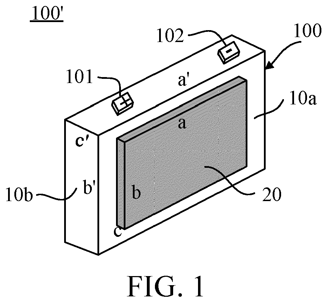

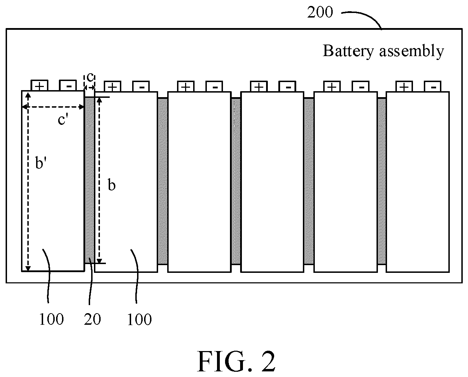

Referring to FIG. 1, FIG. 1 is a schematic structural diagram of a battery assembly according to an example of the present disclosure. FIG. 2 is another schematic structural diagram of a battery assembly according to an example of the present disclosure. The battery assembly in FIG. 1 includes one cell. The battery assembly in FIG. 2 includes multiple cells. The battery assembly 100 in FIG. 1 includes a cell 100 and a heat absorption sheet 20. The cell 100 includes a housing, the housing is square, and the heat absorption sheet 20 is arranged on a side surface of the housing (the surface in FIG. 1 is 10a). An anti-explosion valve (not shown in FIG. 1) is arranged on the housing of the cell 100.

The heat absorption sheet 20 includes a heat absorption main material, and mass m₀ of the heat absorption main material in grams meets the relation: X≤m₀≤400×S₁×c'×ρ, 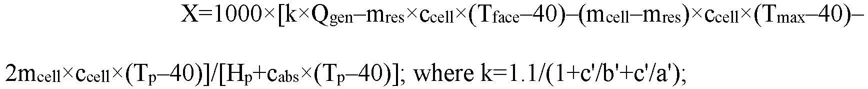 X=1000×[k×Qgen-mres×ccell×(Tface-40)-(mcell-mres)×ccell×(Tmax-40)-2mcell×ccell×(Tp-40)]/[Hp+cabs×(Tp-40)]; where k=1.1/(1+c'/b'+c'/a');
where m_{cell} and mᵣₑₛ are respectively masses of the cell 100 before and after thermal runaway, both in the unit of kg; T_{face} and Tₘₐₓ are respectively a maximum temperature of a side surface on which the heat absorption sheet 20 is arranged during thermal runaway, and a maximum temperature of an anti-explosion valve of the cell 100 during thermal runaway, both in the unit of °C; c_{cell} is a specific heat capacity of the cell 100, in the unit of kJ/(kg·K); Q_{gen} is heat generated by the cell 100 during thermal runaway measured based on Accelerating Rate Calorimetry in the unit of kJ; Tₚ, Hₚ, and c_{ab} are respectively a phase change temperature, phase change latent heat, and a specific heat capacity of the heat absorption main material, in units of °C, kJ/kg, and kJ/(kg·K) sequentially; and ρ is a density of the heat absorption sheet 20 in the unit of kg/m³; S₁ is a frontal projected area of the heat absorption sheet 20 on the side surface of the housing on which the heat absorption sheet is arranged, in the unit of m²; a' and b' are respectively a length and a width of the side surface of the housing on which the heat absorption sheet 20 is arranged, in the unit of meter (m); c' is a dimension of the housing in a direction perpendicular to the side surface of the heat absorption sheet 20, in the unit of meter (m).

In the present disclosure, "the housing is square" means that an outer shape of the housing may be roughly a rectangular cuboid or a cube.

In the present disclosure, "thermal runaway" of the cell 100 may be understood as that a voltage of the cell 100 drops to 0 and the anti-explosion valve is open. During a test process, a method of triggering "thermal runaway" may be a pin-prick test or Accelerating Rate Calorimetry (ARC for short). A detailed operation method of the pin-prick test or Accelerating Rate Calorimetry are introduced respectively below.

It should be noted that, "a side surface" may refer to any surface of a square housing. A heat absorption sheet 20 is arranged on a side surface of a housing. The heat absorption sheet may be arranged on only one side surface or on multiple side surfaces of the housing. When heat absorption sheets are set on multiple side surfaces of the housing, the foregoing parameter T_{face} refers to an average value of the highest temperatures of the multiple side surfaces with the heat absorption sheets 20 during thermal runaway, and the parameter S1 is specific to a heat absorption sheet on one side surface of the multiple side surfaces with the heat absorption sheets 20.

The present disclosure controls a size parameter of a heat absorption sheet 20 arranged on a side surface of a cell 100, a mass of a heat absorption main material, and the like, to meet the foregoing relation. With the heat absorption sheet 20, it can be ensured that heat of any type of square cell 100 that has thermal runaway does not spread to an adjacent battery, and does not cause chain thermal runaway. Besides, a volume of the heat absorption sheet 20 can be smaller, so that a battery system of a specific volume (such as a battery pack) can contain a larger number of cells, with higher space utilization and greater output power.

In addition, the foregoing relation is universal and can be applied to a battery assembly of cells including various systems (including but not limited to a lithium battery, a sodium battery, and the like).

In the present disclosure, a heat absorption sheet 20 may be set on both two oppositely arranged surfaces of a cell housing, or a heat absorption sheet 20 may be set on one of the surfaces of a cell housing. Specifically, a setting may be based on a distribution position of a cell 100 in a battery pack to ensure that a heat absorption sheet is set on a surface opposite to an adjacent cell (this will be described in detail in following texts of the present disclosure). It may be understood that when a heat absorption sheet 20 is arranged between two adjacent cells 100 in a battery assembly containing multiple cells, it is not necessary to arrange two heat absorption sheets between two cells as the two cells can share one heat absorption sheet.

In the present disclosure, k is a heat correction coefficient. k×Q_{gen} represents effective heat transferred through two surfaces perpendicular to a thickness direction of a heat absorption sheet in total heat generated by a cell 100 in thermal runaway. It is found through research that, in a process of thermal propagation, dispersion of heat is closely related to a direction/surface. Based on this, after many experiments, it is found that by introducing a correction coefficient k, X can more accurately reflect heat that a cell needs to dissipate to an environment through a surface corresponding to an adjacent cell. mᵣₑₛ×c_{cell}×(T_{face}-40) represents residual heat of a cell 100 after thermal runaway. (m_{cell}-mᵣₑₛ)×c_{cell}×(Tₘₐₓ-40) represents heat taken away through an anti-explosion valve during a thermal runaway process of a cell 100 undergoing thermal runaway. 2m_{cell}×c_{cell}×(Tₚ-40) represents heat absorbed by a cell adjacent to a cell 100 from the cell in thermal runaway and its adjacent surface, that is, heat taken away by a cell adjacent to a cell 100. A difference between the first item and the last three items may represent a minimum amount of heat that a heat absorption main material of a heat absorption sheet 20 needs to absorb.

Hₚ+c_{abs}×(Tₚ-40) represents heat absorption capacity of a heat absorption main material per unit mass, and its product with m₀ represents total heat that a heat absorption main material can absorb.

400×S₁×c'×ρ=S₁×c'×ρ×1000×0.4 represents upper limit mass of a heat absorption sheet in g (multiplying it by 0.4 means that a maximum thickness of a heat absorption sheet does not exceed 0.4 times a thickness of a cell).

Therefore, by controlling mass m₀ of a heat absorption main material, a size of a heat absorption sheet, a size parameter of a cell housing, and the like, to meet the foregoing relation, heat generated by a cell in a case of thermal runaway can be effectively suppressed from spreading to an adjacent cell, while a volume of a heat absorption sheet will not be too large.

It should be noted that, in the inequality X≤m₀≤400×S₁×c'×ρ, each parameter is calculated without unit. For example, "m_{cell} and mᵣₑₛ are respectively masses of the cell before and after thermal runaway, both in the unit of kg" means that m_{cell} is a value of mass in kilograms of the cell before thermal runaway, and mᵣₑₛ is a value of mass in kilograms of the cell after thermal runaway.

In the present disclosure, "before thermal runaway" may be understood as a mass of a cell in a normal working state and without thermal runaway. A sign of "thermal runaway" is that a voltage of a cell drops to 0 and an anti-explosion valve is open. "After thermal runaway" may be understood as a mass of a cell after its cell core has undergone thermal runaway and its temperature has returned to a room temperature.

m_{cell} and mᵣₑₛ may be obtained through weighing. A terminal is included when measuring a mass parameter of a cell. a', b', c', S₁ and ρ may be obtained through measuring. When measuring dimensional parameters a', b', and c' of a cell, a dimension of a terminal is not included. c_{abs} is an inherent parameter of a heat absorption main material selected for a heat absorption sheet. For example, when the heat absorption main material is hydrogel, c_{abs} is 4.2 kJ/(kg·K). A test of ρ is carried out through a density meter, a principle of which is to determine a density of a substance by measuring its mass in a fixed volume. Place a sample in a density meter, wait a few seconds for the sample to stabilize, and then read the value displayed on the density meter. The foregoing parameters Tₚ and Hₚ may be obtained through Differential Scanning Calorimetry (DSC for short). Specifically, a heat absorption main material may be separated from a heat absorption sheet 20, and then a temperature Tₚ at which the heat absorption main material undergoes a phase change during a temperature rise process and total heat H released during the phase change process may be tested by using Differential Scanning Calorimetry. Then, Hₚ can be obtained by dividing the H by a mass of the heat absorption main material.

A specific heat capacity c_{cell} of a cell 100 may be obtained through testing. A specific test method includes: weighing a cell (which can work normally and does not experience thermal runaway) to obtain its mass as m₁. A heating sheet that is smaller than a cell is fixed between large surfaces of two cells (the heating sheet may be clamped by a clamp) and the heating sheet is placed in an insulating environment at a temperature of 25°C to 35°C (±3°C). Heating power is adjusted so that a cell is heated from 25°C (±3°C) to 35°C (±3°C) at a constant heating power P. A heating rate is controlled to remain unchanged in a range of 0.2 to 0.3°C/min. A thermocouple is arranged on a large surface of a cell to obtain an actual temperature rise rate dT/dt of a cell core during a heating process. Based on ΔQ=c_{cell}×m₁×ΔT=P×Δt, and ΔT/Δt=dT/dt, a specific value of c_{cell} can be obtained through c_{cell}=P/[m₁×(dT/dt)].

T_{face} and Tₘₐₓ are respectively a maximum temperature of a side surface of a housing of a cell on which a heat absorption sheet 20 is arranged during thermal runaway of the cell, and a maximum temperature of an anti-explosion valve during thermal runaway of the cell, both in the unit of °C. In the present disclosure, "during thermal runaway" may be understood as a process in which a cell undergoes thermal runaway and a temperature of the cell rises from a room temperature and then drops to the room temperature. A specific test method of T_{face} and Tₘₐₓ includes arranging a thermocouple sampling wire on a cell. When a heat absorption sheet is arranged only on one surface of the cell, the thermocouple may be arranged at the center of the surface of the cell 100 on which the heat absorption sheet is placed (such as the center of the large surface), and a highest temperature during thermal runaway is T_{face}. When heat absorption sheets are arranged on both sides of a cell, thermocouples need to be arranged at centers of the two sides of the cell 100 (denoted as T₁' and T₁"), and an average value of highest temperatures of T₁' and T₁" during thermal runaway is T_{face}. In addition, a thermocouple (denoted as T₂) needs to be arranged 2 to 5 mm away from an anti-explosion valve of a cell 100. A highest temperature of T₂ during thermal runaway is the foregoing Tₘₐₓ.

Q_{gen} is heat generated by a cell under an insulating condition during thermal runaway measured based on Accelerating Rate Calorimetry (ARC for short). Specifically, a cell is fixed and suspended in an ARC calorimetric chamber (or on a bracket) so that the cell is placed in an insulating environment without heat exchange with a surrounding environment. During an ARC test, a temperature in an ARC calorimetric chamber is first raised from a room temperature to 50±2°C, and left to set for 45 min to allow a temperature of the cell and the environment to fully balance and stabilize, and then a temperature rise rate of the cell sample is tested. If a temperature rise of the cell exceeds 0.2°C within 10 min (that is, SHR>0.02°C/min; SHR is a self-heating rate), it is considered that a self-exothermic reaction has occurred inside the cell. An insulating environment is maintained until the cell experiences thermal runaway, and temperature information of the entire process is recorded. For example, a temperature Tᵢ at a center of a large surface of the cell when SHR>1°C/min (that is, the temperature Tᵢ when SHR changes from less than or equal to 1°C/min to greater than 1°C/min) and a highest temperature Tₘₐₓ of the cell during thermal runaway are recorded. If the temperature rise of the cell does not exceed 0.2°C within 10 min (that is, SHR≤0.02°C/min), a next step of the temperature rise test starts: heating is continued to increase the temperature by 5°C (that is, a temperature difference between two adjacent temperature steps is 5°C), the foregoing test is performed after the cell is left to set at each step for 45 min until SHR>0.02°C/min, then the "step temperature rise" mode is stopped, an insulating mode starts until the cell experiences thermal runaway, and Tᵢ is recorded. A temperature range of the ARC test is 50°C to 300°C. A specific value of Q_{gen} can be obtained based on Q_{gen}=m_{cell}×c_{cell}×(Tₘₐₓ-Tᵢ). In some implementations of the present disclosure, Q_{gen} is greater than 400 kJ.

In some implementations of the present disclosure, capacity of the foregoing cell 100 may be in a range from 2 Ah to 280 Ah.

In some implementations of the present disclosure, the heat absorption sheet 20 includes a base body and a heat absorption main material carried on the base body. In some implementations, the heat absorption sheet 20 is further covered with a sealing film. The sealing film covers the base body and a heat absorption main material on the base body, where the base body may be, for example, an interpenetrating high polymer material. The sealing film can insulate water vapor in the air, and the sealing film may be selected from one or more of PP (polypropylene), PET (polyethylene terephthalate), PI (polyimide), TPU (thermoplastic polyurethane elastomer rubber), and the like. In some implementations, the base body also carries a binding agent.

In some implementations of the present disclosure, phase change latent heat Hₚ of the heat absorption main material is above 500 kJ/kg. The heat absorption main material has a larger Hₚ and a higher ability to absorb heat, and can better suppress thermal diffusion of a cell with thermal runaway.

In some implementations of the present disclosure, Tₚ of the heat absorption main material is in a range from 85°C to 180°C. In some implementations, Tₚ of the heat absorption main material is in the range of 85°C to 170°C, 85°C to 160°C, 85°C to 150°C, 85°C to 140°C, 85°C to 130°C, 85°C to 120°C or 85°C to 110°C. In some implementations, Tₚ of the heat absorption main material is in the range of 93°C to 180°C, 93°C to 170°C, 93°C to 160°C, 93°C to 150°C, 93°C to 140°C, 93°C to 130°C, 93°C to 120°C or 93°C to 110°C. In this way, at a beginning stage of thermal runaway of the cell, the heat absorption main material can quickly absorb heat to take away heat and suppress thermal propagation. Specifically, Tₚ may be 88°C, 90°C, 95°C, 100°C, 120°C, 130°C, 140°C, 150°C, 160°C, 170°C, or the like. In some implementations, Tₚ of the heat absorption main material is among 93°C to 130°C. For example, the foregoing heat absorption main material may specifically include but is not limited to hydrogel, hydrated salt, or a composite thereof, or a composite with another material (such as a flame retardant), and the like.

In some implementations of the present disclosure, Tₘₐₓ is greater than 300°C. In some implementations, Tₘₐₓ is above 700°C, for example, 710°C, 750°C, 800°C, 850°C, 950°C, 1000°C, or the like. In some implementations, Tₘₐₓ is in the range of 350°C to 1000°C, 450°C to 950°C, 550°C to 900°C, 500°C to 850°C, or 550°C to 750°C.

In some implementations of the present disclosure, a housing has a first side surface and a second side surface which are oppositely arranged in a thickness direction, and at least one of the first side surface and the second side surface is arranged with a heat absorption sheet 20. a', b', c' are respectively a length, a width, and a thickness of the housing, all in the unit of m, and a'≥b'>c'.

That is, as shown in FIG. 1 and FIG. 2, the heat absorption sheet 20 is placed on one large surface 10a or both large surfaces 10a of the housing of the cell, and the large surface 10a is a side surface of the housing with the largest area. When a number of cells are assembled into a battery assembly (as shown in FIG. 2), the large surface is also a side surface of a cell 100 that is opposite to an adjacent cell. It may be understood that the square housing of the cell includes two oppositely arranged large surfaces 10a and two oppositely arranged small surfaces 10b. The two large surfaces 10a are connected by small surfaces 10b respectively. The two large surfaces 10a and the two small surfaces 10b form a square housing, and the cell 100 is also a square cell accordingly. An anti-explosion valve is arranged on the small surface 10b of the housing or on the top of the housing.

In this case, T_{face} is a maximum temperature of the large surface 10a during thermal runaway, in the unit of °C. S₁ is a frontal projected area of the heat absorption sheet 20 on the large surface 10a, in the unit of m². a', b', c' are respectively a length, a width, and a thickness of the housing, all in the unit of m. The length a' of the housing is greater than or equal to the width b', and the width b' is greater than the thickness c'. That is, a'≥b'>c'. A plane formed by the length a' and the width b' of the housing is a large surface 10a of the housing, and a plane formed by the width b' and the thickness c' of the housing is a small surface 10b of the housing. In some examples, a'>b'>c'.

In an example shown in FIG. 1, a plane formed by a length a and a width b of the heat absorption sheet 20 is parallel to the large surface 10a of the housing. In this case, a frontal projected area S₁ of the heat absorption sheet 20 on a surface of the housing on which a heat absorption sheet is arranged is equal to a product of the length a and the width b of the heat absorption sheet 20 (that is, S₁=a×b, where a and b are both in meters). A thickness c of the heat absorption sheet 20 is generally smaller than the length a and the width b thereof.

FIG. 1 illustrates an example in which a projected area S₁ of a heat absorption sheet 20 on a large surface 10a is smaller than a large surface 10a of a housing. It may be understood that in another example of the present disclosure, S₁ may alternatively be larger than an area of a housing surface on which a heat absorption sheet 20 is set.

In some implementations of the present disclosure, a ratio of the length a of the heat absorption sheet 20 to the length a' of the cell housing is between 0.5 and 1, that is, 0.5a'≤a≤a'. A ratio of the width b of the heat absorption sheet 20 to the width b' of the cell housing is between 0.5 and 1, that is, 0.5b'≤b≤b'. In this way, a heat absorption sheet can be ensured to be a thin slice structure with large lateral dimension and small thickness, thereby facilitating a battery pack or a battery set including a number of the foregoing cells 100 to have greater space utilization.

In addition, the thickness c of the heat absorption sheet 20 may be greater than or equal to 0.0002 meter. In this way, a heat absorption sheet 20 can be ensured to effectively prevent a thermal runaway cell from thermal propagation. In this implementation of the present disclosure, c is less than or equal to 0.5c' to ensure that space utilization of a battery pack or a battery set including a number of the cells is high.

In the present disclosure, the housing of the cell can accommodate an electrode core (not shown in the figure). The cell 100 also has a positive terminal 101 and a negative terminal 102 exposed on the top of the housing. An electrode core generally includes multiple positive electrode sheets and multiple negative electrode sheets, and an adjacent positive electrode sheet and a negative electrode sheet are separated. A positive terminal 101 of a cell 100 can be electrically connected to a positive electrode sheet, and a negative terminal 102 can be electrically connected to a negative electrode sheet. The two terminals can serve as electrical contact points when a cell 100 is charged and discharged. In addition, the foregoing cell 100 may be a liquid battery, or an all-solid battery or a semi-solid battery.

A battery assembly 100' shown in FIG. 1 may be a cell with a heat absorption sheet on its surface. A battery assembly 200 shown in FIG. 2 includes multiple cells 100, and a heat absorption sheet 20 is arranged between at least two adjacent cells 100. In this case, the battery assembly 200 may be specifically a battery pack, a battery module, or a module-less battery set. In the foregoing battery assembly 200, a number of cells 100 may be connected in series, in parallel, or in combination thereof to form a battery module. A number of cells 100 may be packaged together by a same housing frame and communicate with the outside through a unified boundary. When the battery assembly 200 shown in FIG. 2 is specifically a battery pack, it may also include a battery pack tray and an upper cover (not shown in the figure).

In some examples of the present disclosure, still referring to FIG. 2, a battery assembly includes a number of cells 100 arranged along a first direction (that is, a left-right direction in FIG. 2), and a heat absorption sheet 20 is arranged between any two adjacent cells 100 in the number of cells arranged along the first direction. In FIG. 2, the heat absorption sheet 20 is arranged between oppositely arranged large surfaces 10a of any two adjacent cells 100. In some implementations of the present disclosure, the first direction (that is, the left-right direction in FIG. 2) is a thickness direction of a housing of a cell 100. In other words, a number of cells 100 are arranged in the thickness direction of the cell housing, and the heat absorption sheet 20 is arranged on one side surface or both side surfaces of the cell housing in the thickness direction.

In this implementation of the present disclosure, the cell 100 and the heat absorption sheet 20 are arranged alternately along the first direction. That is, two adjacent cells 100 are separated by a heat absorption sheet 20, and two adjacent heat absorption sheets 20 are separated by a cell 100. If the cell 100 is denoted as A and the heat absorption sheet 20 is denoted as B, an arrangement thereof may be B-A-B-A-B...A-B, A-B-A-B...A, and the like.

Since heat absorption sheets 20 arranged between at least some adjacent cells 100 in a battery assembly 200 meet the foregoing relation, when thermal runaway occurs in one cell or some cells, thermal propagation/heat spread is fully suppressed by the heat absorption sheets to avoid affecting adjacent cells, thereby ensuring that the battery assembly 200 has good safety performance and can still output energy to an electrical equipment. In addition, in the battery assembly 200, a volume of the heat absorption sheets 20 accounts for a small proportion, and space utilization of the battery assembly is high, ensuring that it can provide a high amount of electricity to the electrical equipment, and has outstanding market competitiveness.

An example of the present disclosure further provides a device that includes the foregoing battery assembly of the example of the present disclosure. The device may be an electrical device including a transportation tool (such as a ship or a vehicle), a 3C product (such as a mobile phone or a tablet computer), and the like; the device may alternatively be an energy storage system. The vehicle may be a battery electric vehicle, a hybrid vehicle, an extended-range electric vehicle, or the like.

A technical solution of the present disclosure is further described below in conjunction with a number of specific examples.

### Example 1

A square cell with a mass of 0.89 kg and a ternary 811 cell core type is provided, and dimensions of a housing are as follows: a length a' is 148 mm, a width b' is 97 mm, and a thickness c' is 28 mm.

A triggering condition for thermal runaway of the cell is: room temperature (25°C±2°C), 100% SOC, and cell pin-prick. A thermocouple is arranged on the cell for temperature acquisition. After thermal runaway, a mass of a cell core is weighed to obtain a mass mᵣₑₛ. Heat generation Q_{gen} of a cell with thermal runaway, a maximum temperature T_{face} of a large surface of the cell during thermal runaway, a maximum temperature Tₘₐₓ at an anti-explosion valve (see Table 1), and an ambient temperature Tₑₙ (specifically 40°C) of the cell in thermal runaway are obtained through Accelerating Rate Calorimetry (ARC). In addition, a specific heat capacity c_{cell} of the cell is measured to be 1.1 kJ/(kg·K).

A heat absorption main material (specifically hydrogel) with a specific heat capacity c_{abs} of 4.2 kJ/(kg·K) is selected. A gel polymer material is mixed with water to be applied on a base body into a sheet material of a specific thickness, and then cut into corresponding length and width dimensions to form a required heat absorption sheet (see Table 1 for a dimension), and the heat absorption sheet is heat-sealed on all sides with a PET film. Through the DSC method, phase change latent heat Hₚ of a heat absorption main material in the heat absorption sheet is tested to be 1600 kJ/kg, and a phase change temperature Tₚ is 118°C. In addition, a density ρ of the heat absorption sheet is measured to be 1030 kg/m³. According to the foregoing relation provided in the present disclosure, an upper limit value (namely, 400×S₁×c'×ρ) and a lower limit value (namely, X) of a mass of the heat absorption sheet are calculated, and a specific usage value within this range is determined, referring to Table 1.

The foregoing five cells are sequentially arranged and assembled into a battery set, then a battery pack is made, and a heat absorption sheet is placed between adjacent cells. A mass of a heat absorption main material in a single heat absorption sheet of each example is shown in a value of m₀ in Table 1, and in a same example, masses of heat absorption main materials of heat absorption sheets are the same, and a pin-prick test is performed. See Table 1 for results. Test steps of the pin-prick test includes: after each cell is fully charged, puncture a middle cell (that is, the third cell among five cells arranged in sequence) in a middle position by a steel needle with a diameter of 3 mm at a speed of 0.5 mm/s until the cell has thermal runaway, and then stop; continue to observe the cell until a collected temperature is less than 100°C; and after the experiment, record whether adjacent cells have thermal runaway (a thermal runaway standard is that a voltage drops to 0 and an anti-explosion valve is open), that is, whether thermal propagation occurs.

Examples 2 to 5 and Comparative Examples 1 and 2:

With reference to Example 1, a cell and a battery pack of another example or comparative example are prepared, and a specific difference is shown in Table 1. A specific test method for each parameter is detailed in the description of examples of the specification.

**Table 1**

| | Example 1 | Example 2 | Example 3 | Example 4 | Example 5 | Comparative Example 1 | Comparative Example 2 |
|---|---|---|---|---|---|---|---|
| Cell core type | Ternary 811 | Ternary 811 | Ternary 532 | Ternary 811 | Ternary 622 | Ternary 811 | Ternary 811 |
| m_{cell} (kg) | 0.89 | 1.32 | 1.29 | 4.06 | 4.1 | 0.9 | 1.33 |
| mᵣₑₛ (kg) | 0.5607 | 0.8052 | 0.8772 | 2.1518 | 2.747 | 0.594 | 0.7847 |
| Q_{gen} (kJ) | 946 | 1510 | 1300 | 7100 | 6300 | 1010 | 1586 |
| T_{face} (°C) | 480 | 590 | 520 | 675 | 620 | 510 | 624 |
| Tₘₐₓ (°C) | 710 | 850 | 780 | 900 | 808 | 725 | 876 |
| Battery: length a'×width b'×thickness c' (mm) | 148×97×28 | 475×83.8×14.5 | Same as Example 2 | 250×113×67 | Same as Example 4 | Same as Example 1 | Same as Example 2 |
| Heat absorption sheet: length a×width b×thickness c (mm) | 146×93×2.5 | 470×80×3.2 | Same as Example 2 | 246×110×5.1 | Same as Example 4 | 146×93×1.0 | 470×80×2.0 |
| k | 0.744 | 0.914 | 0.914 | 0.591 | 0.591 | 0.744 | 0.914 |
| Lower limit of m₀ (g) | 19 | 108 | 87 | 100 | 65 | 31 | 112 |
| Upper limit of m₀ (g) | 157 | 225 | 225 | 747 | 747 | 157 | 225 |
| m₀ (g) | 35 | 124 | 124 | 146 | 146 | 14 | 77 |
| Result of pin-prick | No thermal propagation | No thermal propagation | No thermal propagation | No thermal propagation | No thermal propagation | Thermal propagation | Thermal propagation |
| | occurs | occurs | occurs | occurs | occurs | occurs | occurs |

It can be seen from Table 1 that when a size, a mass, and the like of a heat absorption sheet arranged between cells meet a relation required by the present disclosure, the heat absorption sheet can better suppress thermal propagation of a cell to an adjacent cell during thermal runaway. A comparison between Comparative Example 1 and Example 1, and a comparison between Comparative Example 2 and Example 2 show that when a heat absorption sheet does not meet the foregoing relation of the present disclosure, it cannot suppress thermal propagation of a cell with thermal runaway. In addition, sizes of cells and heat absorption sheets are same between Example 2 and Example 3, and between Example 4 and Example 5, but cell types are different. However, when a relation between a size and a mass of a heat absorption sheet meets the relation provided in the present disclosure, thermal propagation of a cell with thermal runaway can be well suppressed, which proves that the relation provided in the present disclosure has good universality.

The foregoing examples show only several implementations of the present disclosure and are described in detail, but are not to be construed as a limitation to a patent scope of the present invention, as defined by the appended claims.

## Claims

1. A battery assembly (200), the battery assembly comprising a cell (100) and a heat absorption sheet (20); the cell comprising a housing, the housing being square, and the heat absorption sheet being arranged on a side surface of the housing; and an anti-explosion valve being arranged on the cell; wherein the heat absorption sheet comprises a heat absorption main material, and mass m₀ of the heat absorption main material in grams meets the following relation: $X \leq {m}_{0} \leq 400 \times {S}_{1} \times c ′ \times ρ ,$ 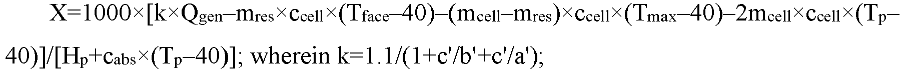 X=1000×[k×Qgen-mres×ccell×(Tface-40)-(mcell-mres)×ccell×(Tmax-40)-2mcell×ccell×(Tp-40)]/[Hp+cabs×(Tp-40)]; wherein k=1.1/(1+c'/b'+c'/a'); wherein m_{cell} and mᵣₑₛ are respectively masses of the cell before and after thermal runaway, both in the unit of kg; T_{face} and Tₘₐₓ are respectively a maximum temperature of the side surface on which the heat absorption sheet is arranged during thermal runaway, and a maximum temperature of the anti-explosion valve during thermal runaway, both in the unit of °C; c_{cell} is a specific heat capacity of the cell, in the unit of kJ/(kg-K); Q_{gen} is heat generated by the cell during thermal runaway measured based on Accelerating Rate Calorimetry, in the unit of kJ; Tₚ, Hₚ, and c_{abs} are respectively a phase change temperature, phase change latent heat, and a specific heat capacity of the heat absorption main material, in units of °C, kJ/kg, and kJ/(kg·K) sequentially; and ρ is a density of the heat absorption sheet in the unit of kg/m³; S₁ is a frontal projected area of the heat absorption sheet on the side surface of the housing on which the heat absorption sheet is arranged, in the unit of m²; a' and b' are respectively a length and a width of the side surface of the housing on which the heat absorption sheet is arranged, in the unit of m; and c' is a dimension of the housing in a direction perpendicular to the side surface, in the unit of m.

2. The battery assembly according to claim 1, wherein a'≥b'>c'.

3. The battery assembly according to claim 1 or 2, wherein a ratio of a length of the heat absorption sheet in meters to a' is between 0.5 and 1.

4. The battery assembly according to any one of claims 1 to 3, wherein a ratio of a width of the heat absorption sheet in meters to b' is between 0.5 and 1.

5. The battery assembly according to any of claims 1 to 4, wherein a thickness of the heat absorption sheet is greater than or equal to 0.0002 meter.

6. The battery assembly according to any of claims 1 to 5, wherein a thickness of the heat absorption sheet is less than or equal to 0.5c'.

7. The battery assembly according to any of claims 1 to 6, wherein the battery assembly meets at least one of (1) to (4) as follows:
(1) Hₚ is greater than or equal to 500 kJ/kg;
(2) Tₚ ranges from 85°C to 180°C;
(3) Tₘₐₓ is greater than 300°C; and
(4) Q_{gen} is greater than 400 kJ.

8. The battery assembly according to any of claims 1 to 7, wherein the heat absorption main material comprises at least one of hydrogel and hydrated salt.

9. The battery assembly according to any of claims 1 to 8, wherein the heat absorption sheet comprises a base body and the heat absorption main material carried on the base body.

10. The battery assembly according to any of claims 1 to 9, wherein a surface of the heat absorption sheet is further covered with a sealing film.

11. The battery assembly according to any of claims 1 to 10, wherein the housing has a first side surface and a second side surface which are oppositely arranged in a thickness direction, and at least one of the first side surface and the second side surface is provided with the heat absorption sheet; and a', b', c' are respectively a length, a width, and a thickness of the housing, all in the unit of m, and a'≥b'>c'.

12. The battery assembly according to any of claims 1 to 11, wherein the battery assembly comprises a plurality of cells, and the heat absorption sheet is arranged between at least two adjacent cells.

13. The battery assembly according to any of claims 1 to 12, wherein the battery assembly comprises the plurality of cells arranged along a first direction, and in the plurality of cells arranged along the first direction, the heat absorption sheet is arranged between any two adjacent cells.

14. The battery assembly according to claim 13, wherein the first direction is the thickness direction of the housing of the cell.

15. A device comprising the battery assembly according to any one of claims 1 to 14, the device being an electrical device or an energy storage system.

## Patentansprüche

1. Batteriebaugruppe (200), wobei die Batteriebaugruppe eine Zelle (100) und eine Wärmeabsorptionsfolie (20) umfasst; wobei die Zelle ein Gehäuse umfasst, das Gehäuse quadratisch ist und die Wärmeabsorptionsfolie an einer Seitenoberfläche des Gehäuses angeordnet ist; und wobei an der Zelle ein Explosionsschutzventil angeordnet ist; wobei die Wärmeabsorptionsfolie ein Wärmeabsorptionshauptmaterial umfasst und die Masse m₀ des Wärmeabsorptionshauptmaterials in Gramm die folgende Beziehung erfüllt: $X \leq {m}_{0} \leq 400 \times {S}_{1} \times c ′ \times ρ ,$ 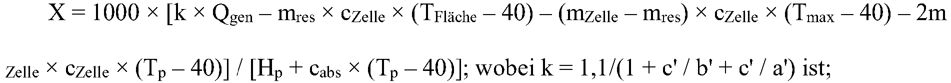 X = 1000 × [k × Qgen - mres × cZelle × (TFläche - 40) - (mZelle - mres) × cZelle × (Tmax - 40) - 2m Zelle × cZelle × (Tp - 40)] / [Hp + cabs × (Tp - 40)]; wobei k = 1,1/(1 + c' / b' + c' / a') ist; wobei m_{Zelle} und mᵣₑₛ jeweils die Massen der Zelle vor und nach dem thermischen Durchgehen sind, beide in der Einheit kg; T_{Fläche} und Tₘₐₓ jeweils die maximale Temperatur der Seitenoberfläche sind, auf der die Wärmeabsorptionsfolie während des thermischen Durchgehens angeordnet ist, und die maximale Temperatur des Explosionsschutzventils während des thermischen Durchgehens, beide in der Einheit °C; c_{Zelle} die spezifische Wärmekapazität der Zelle ist, in der Einheit kJ/(kg·K); Q_{gen} die von der Zelle während des thermischen Durchgehens erzeugte Wärme ist, gemessen auf Grundlage der Beschleunigungsrate-Kalorimetrie, in der Einheit kJ; Tₚ, Hₚ und c_{abs} jeweils die Phasenübergangstemperatur, die Phasenübergangsumwandlungswärme und eine spezifische Wärmekapazität des Wärmeabsorptionshautpmaterials, in den Einheiten °C, kJ/kg und kJ/(kg·K); und ρ die Dichte der Wärmeabsorptionsfolie in der Einheit kg/m³ ist; S₁ die frontale Projektionsfläche der Wärmeabsorptionsfolie auf der Seitenoberfläche des Gehäuses ist, auf der die Wärmeabsorptionsfolie angeordnet ist, in der Einheit m²; a' und b' jeweils eine Länge und eine Breite der Seitenoberfläche des Gehäuses sind, an der die Wärmeabsorptionsfolie angeordnet ist, in der Einheit m; und c' eine Abmessung des Gehäuses in einer Richtung senkrecht zu der Seitenoberfläche ist, in der Einheit m.

2. Batteriebaugruppe nach Anspruch 1, wobei a' ≥ b' > c' gilt.

3. Batteriebaugruppe nach Anspruch 1 oder 2, wobei ein Verhältnis einer Länge der Wärmeabsorptionsfolie in Metern zu a' zwischen 0,5 und 1 liegt.

4. Batteriebaugruppe nach einem der Ansprüche 1 bis 3, wobei ein Verhältnis einer Breite der Wärmeabsorptionsfolie in Metern zu b' zwischen 0,5 und 1 liegt.

5. Batteriebaugruppe nach einem der Ansprüche 1 bis 4, wobei eine Dicke der Wärmeabsorptionsfolie größer oder gleich 0,0002 Meter ist.

6. Batteriebaugruppe nach einem der Ansprüche 1 bis 5, wobei eine Dicke der Wärmeabsorptionsfolie kleiner oder gleich 0,5c' ist.

7. Batteriebaugruppe nach einem der Ansprüche 1 bis 6, wobei die Batteriebaugruppe wenigstens eines von (1) bis (4) wie folgt erfüllt:
(1) Hₚ ist größer oder gleich 500 kJ/kg;
(2) Tₚ liegt im Bereich von 85 °C bis 180 °C;
(3) Tₘₐₓ ist größer als 300 °C; und
(4) Q_{gen} ist größer als 400 kJ.

8. Batteriebaugruppe nach einem der Ansprüche 1 bis 7, wobei das Wärmeabsorptionshauptmaterial wenigstens eines aus Hydrogel und hydratisiertem Salz umfasst.

9. Batteriebaugruppe nach einem der Ansprüche 1 bis 8, wobei die Wärmeabsorptionsfolie einen Grundkörper und das auf dem Grundkörper getragene Wärmeabsorptionshauptmaterial umfasst.

10. Batteriebaugruppe nach einem der Ansprüche 1 bis 9, wobei eine Oberfläche der Wärmeabsorptionsfolie ferner mit einer Versiegelungsfolie bedeckt ist.

11. Batteriebaugruppe nach einem der Ansprüche 1 bis 10, wobei das Gehäuse eine erste Seitenoberfläche und eine zweite Seitenoberfläche aufweist, die in einer Dickenrichtung einander gegenüberliegend angeordnet sind, und wobei wenigstens eine der ersten Seitenoberfläche und der zweiten Seitenoberfläche mit der Wärmeabsorptionsfolie versehen ist; und a', b', c' jeweils eine Länge, eine Breite und eine Dicke des Gehäuses sind, alle in der Einheit m, wobei a' ≥ b' > c' gilt.

12. Batteriebaugruppe nach einem der Ansprüche 1 bis 11, wobei die Batteriebaugruppe eine Mehrzahl von Zellen umfasst und die Wärmeabsorptionsfolie zwischen wenigstens zwei benachbarten Zellen angeordnet ist.

13. Batteriebaugruppe nach einem der Ansprüche 1 bis 12, wobei die Batteriebaugruppe die Mehrzahl von Zellen umfasst, die entlang einer ersten Richtung angeordnet sind, und in der Mehrzahl von Zellen, die entlang der ersten Richtung angeordnet sind, die Wärmeabsorptionsfolie zwischen zwei angrenzenden Zellen angeordnet ist.

14. Batteriebaugruppe nach Anspruch 13, wobei die erste Richtung die Dickenrichtung des Gehäuses der Zelle ist.

15. Vorrichtung, die die Batteriebaugruppe nach einem der Ansprüche 1 bis 14 umfasst, wobei die Vorrichtung eine elektrische Vorrichtung oder ein Energiespeichersystem ist.

## Revendications

1. Ensemble batterie (200), l'ensemble batterie comprenant une cellule (100) et une feuille d'absorption thermique (20) ; la cellule comprenant un boîtier, le boîtier étant carré, et la feuille d'absorption thermique étant agencée sur une face latérale du boîtier ; et une soupape anti-explosion étant agencée sur la cellule ; dans lequel la feuille d'absorption thermique comprend un matériau principal d'absorption thermique, et la masse m₀ du matériau principal d'absorption thermique en grammes satisfait à la relation suivante : $X \leq {m}_{0} \leq 400 \times {S}_{1} \times c ′ \times ρ ,$ 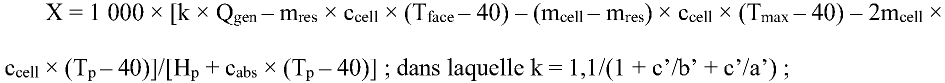 X = 1 000 × [k × Qgen - mres × ccell × (Tface - 40) - (mcell - mres) × ccell × (Tmax - 40) - 2mcell × ccell × (Tp - 40)]/[Hp + cabs × (Tp - 40)] ; dans laquelle k = 1,1/(1 + c'/b' + c'/a') ; dans laquelle m_{cell} et mᵣₑₛ sont respectivement les masses de la cellule avant et après emballement thermique, toutes deux exprimées en kg ; T_{face} et Tₘₐₓ sont respectivement une température maximale de la surface latérale sur laquelle est agencée la feuille d'absorption thermique pendant un emballement thermique, et une température maximale de la soupape anti-explosion pendant un emballement thermique, toutes deux exprimées en °C ; c_{cell} est une capacité thermique spécifique de la cellule, exprimée en kJ/(kg·K) ; Q_{gen} est la chaleur générée par la cellule pendant un emballement thermique mesurée sur la base de la calorimétrie à taux d'accélération, exprimée en kJ ; Tₚ, Hₚ, et c_{abs} sont respectivement une température de changement de phase, une chaleur latente de changement de phase, et une capacité thermique spécifique du matériau principal d'absorption thermique, exprimées en °C, kJ/kg et kJ/(kg·K) séquentiellement ; et ρ est une densité de la feuille d'absorption thermique, exprimée en kg/m³ ; S₁ est une aire projetée frontale de la feuille d'absorption thermique sur la surface latérale du boîtier sur laquelle est agencée la feuille d'absorption thermique, exprimée en m² ; a' et b' sont respectivement une longueur et une largeur de la surface latérale du boîtier sur laquelle est agencée la feuille d'absorption thermique, exprimées en m ; et c' est une dimension du boîtier dans une direction perpendiculaire à la surface latérale, exprimée en m.

2. Ensemble batterie selon la revendication 1, dans lequel a' ≥ b' > c'.

3. Ensemble batterie selon la revendication 1 ou 2, dans lequel un rapport entre une longueur de la feuille d'absorption thermique en mètres et a' est entre 0,5 et 1.

4. Ensemble batterie selon l'une quelconque des revendications 1 à 3, dans lequel un rapport entre une largeur de la feuille d'absorption thermique en mètres et b' est entre 0,5 et 1.

5. Ensemble batterie selon l'une quelconque des revendications 1 à 4, dans lequel une épaisseur de la feuille d'absorption thermique est supérieure ou égale à 0,0002 mètre.

6. Ensemble batterie selon l'une quelconque des revendications 1 à 5, dans lequel une épaisseur de la feuille d'absorption thermique est inférieure ou égale à 0,5c'.

7. Ensemble batterie selon l'une quelconque des revendications 1 à 6, dans lequel l'ensemble batterie satisfait à au moins l'une des conditions (1) à (4) suivantes :
(1) Hₚ est supérieure ou égale à 500 kJ/kg ;
(2) Tₚ est dans la plage de 85 °C à 180 °C ;
(3) Tₘₐₓ est supérieure à 300 °C ; et
(4) Q_{gen} est supérieure à 400 kJ.

8. Ensemble batterie selon l'une quelconque des revendications 1 à 7, dans lequel le matériau principal d'absorption thermique comprend au moins l'un parmi un hydrogel et un sel hydraté.

9. Ensemble batterie selon l'une quelconque des revendications 1 à 8, dans lequel la feuille d'absorption thermique comprend un corps de base et le matériau principal d'absorption thermique porté sur le corps de base.

10. Ensemble batterie selon l'une quelconque des revendications 1 à 9, dans lequel une surface de la feuille d'absorption thermique est en outre recouverte d'un film d'étanchéité.

11. Ensemble batterie selon l'une quelconque des revendications 1 à 10, dans lequel le boîtier présente une première surface latérale et une seconde surface latérale qui sont agencées de manière opposée dans une direction d'épaisseur, et au moins l'une parmi la première surface latérale et la seconde surface latérale est pourvue de la feuille d'absorption thermique ; et a', b', c' sont respectivement une longueur, une largeur et une épaisseur du boîtier, toutes exprimées en mètres, et a' ≥ b' > c'.

12. Ensemble batterie selon l'une quelconque des revendications 1 à 11, dans lequel l'ensemble batterie comprend une pluralité de cellules, et la feuille d'absorption thermique est agencée entre au moins deux cellules adjacentes.

13. Ensemble batterie selon l'une quelconque des revendications 1 à 12, dans lequel l'ensemble batterie comprend la pluralité de cellules agencées le long d'une première direction, et dans la pluralité de cellules agencées le long de la première direction, la feuille d'absorption thermique est agencée entre deux cellules adjacentes quelconques.

14. Ensemble batterie selon la revendication 13, dans lequel la première direction est la direction d'épaisseur du boîtier de la cellule.

15. Dispositif comprenant l'ensemble batterie selon l'une quelconque des revendications 1 à 14, le dispositif étant un dispositif électrique ou un système de stockage d'énergie.
